# EUROPÄISCHE PATENTSCHRIFT

(11) **EP 0 731 365 B1**
(45) Veröffentlichungstag und Bekanntmachung des Hinweises auf die Patenterteilung: **23.12.1998**
(21) Anmeldenummer: 96102068.2
(22) Anmeldetag: 13.02.1996
(51) Int. Cl.: G02B 6/12, G02F 1/01

(54) **Verfahren zur Herstellung eines elektrooptischen Bauelements**
Method of manufacturing an electrooptical device
Méthode de fabrication d'un dispositif électro-optique

(30) Priorität: 07.03.1995 DE 19508025
(43) Veröffentlichungstag der Anmeldung: 11.09.1996
(73) Patentinhaber: ROBERT BOSCH GMBH, 70442 Stuttgart (DE)
(72) Erfinder: Hahn, Dietmar, Dr.Phys., D-70839 Gerlingen (DE); Mayer, Klaus-Michael, Dr.Phys., D-70839 Gerlingen (DE); Dannberg, Peter, Dr.Phys., D-07745 Jena (DE); Scharrer, Volker, Phys., D-91792 Ellingen (DE)

(56) Entgegenhaltungen:
- EP-A- 0 559 040
- US-A- 5 093 883
- EUROPEAN CONFERENCE ON INTEGRATED OPTICS ECIO-93, 1993, NEUCHATEL, XP000197215 KRAGL H: "POPCORN: A novel technology for polymer based integrated optics"
- PROCEEDINGS OF THE EUROPEAN CONFERENCE ON OPTICAL COMMUNICATION (EC, MONTREUX, SEPT. 12 - 16, 1993 REGULAR PAPERS, Bd. 2, 12.September 1993, SWISS ELECTROTECHNICAL ASSOCIATION, Seiten 437-440, XP000492253 DANNBERG P ET AL: "PASSIVE POLYMERIC COMPONENTS FABRICATED BY EMBOSSING TECHNIQUE"

## Beschreibung

### Stand der Technik

Die Erfindung geht aus von einem Verfahren nach der Gattung des Hauptanspruchs. Ein Verfahren dieser Art ist bekannt aus der Veröffentlichung "Popcorn: A Novel Technology for Polymer Based Integrated Optics", H. Kragl, 1993 ECIO-93, Neuchatel, Konferenzband. Danach wird zur Herstellung eines optischen Hybridbauelements zunächst von einem Formwerkzeug eine Lichtwellenleiterstruktur auf ein Wellenleitersubstrat abgeformt. Mittels eines zweiten Formwerkzeuges wird weiterhin ein Halbleiterbauelement, hier ein Indiumphosphid (InP) Detektorchip, mit Kunststoff zu einer Deckplatte vergossen. Für eine präzise Justierung ist in den Halbleiterchip eine Justiernut eingearbeitet, in die entsprechende Justiererhebungen auf dem Formwerkzeug greifen. Nach dem Einguß in Polymermaterial dient die Justiernut dazu, die Deckplatte mit dem Halbleiterchip exakt auf dem zuvor erzeugten Wellenleitersubstrat mit den Lichtwellenleiterstrukturen zu positionieren. Zur elektrischen Versorgung des Halbleiterbauelementes sind an seiner Unterseite Leiterbahnen angeordnet. Das Konzept einer Justiernut, welche mit auf dem Wellenleitersubstrat vorhandenen Gegenjustierstrukturen zusammenwirkt, gestattet es, ein Halbleiterbauelement präzise auf ein Wellenleitersubstrat zu justieren. Allerdings ist zur Ausbildung der Justiernut im Halbleiterbauelement ein aufwendiger Arbeitsschritt erforderlich.

Es ist Aufgabe der Erfindung, ein Verfahren anzugeben, welches eine exakte Zuordnung von Lichtwellenleitern und elektrischen Leiterbahnen erlaubt.

Diese Aufgabe wird gelöst durch ein Verfahren mit den kennzeichnenden Merkmalen des Hauptanspruchs.

Das erfindungsgemäße Verfahren gestattet die Herstellung von elektrooptischen Bauelementen mit einander in vorgegebener Weise exakt zugeordneten optischen und elektrischen Strukturen. Die Ausrichtung zueinander erfolgt durch eine selbstjustierende, mechanische Technik. Aktive Justiervorgänge oder photolitographische Prozeßschritte sind nicht erforderlich. Das Verfahren basiert auf einfachen und kostengünstigen Methoden der Kunststoffmassenfertigung, und läßt einen hohen Automatisierungsgrad zu.

Ein Ausführungsbeispiel der Erfindung wird nachfolgend unter Bezugnahme auf die Zeichnung näher erläutert.

### Zeichnung

Es zeigen Figur 1 eine metallisierte Trägerplatte im Schnitt, Figur 2 ein Formwerkzeug mit einer bearbeiteten Trägerplatte im Schnitt, Figur 3 eine Trägerplatte mit galvanisch verstärkten Leiterbahnen im Schnitt, Figur 4 einen Schnitt durch eine bearbeitete Trägerplatte mit einem im Eingriff befindlichen zweiten Formwerkzeug, Figur 5 ein Bauelement vor dem Aufsetzen einer Deckelplatte.

### Beschreibung

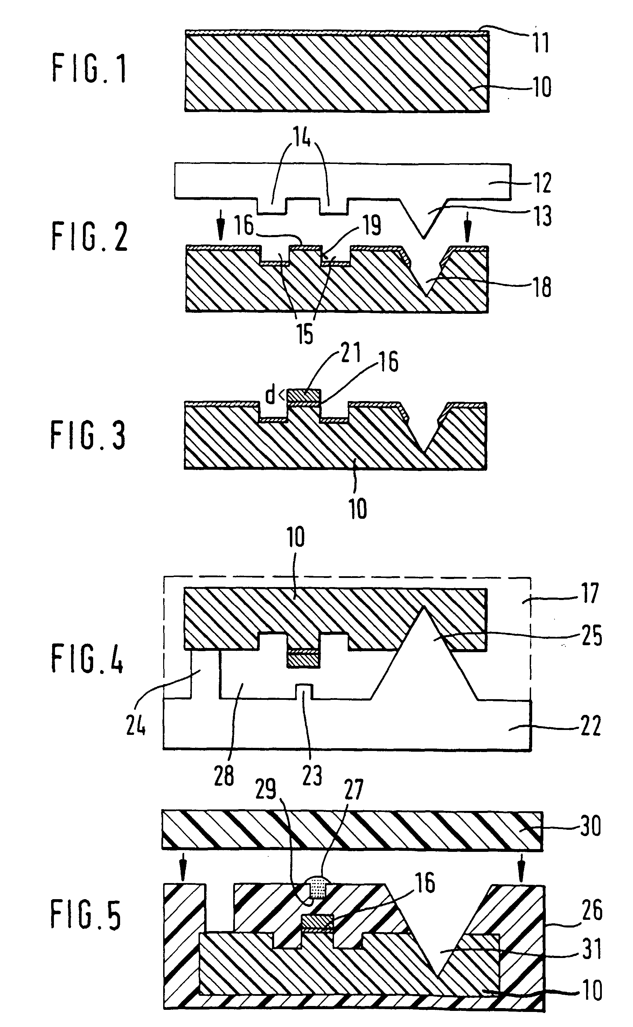

Ausgangsbasis für das vorgeschlagene Verfahren bildet, wie in Figur 1 wiedergegeben, eine Trägerplatte 10 aus Kunststoff, auf die durch Aufdampfen oder Sputtern ganzflächig eine dünne Metallschicht 11 aufgebracht wurde. Die Trägerplatte 10 besteht aus einem thermoplastischen Material. Geeignet sind solche Materialien, welche einerseits den Bedingungen bei der Herstellung, insbesondere bei der Metallisierung, als auch den später zu erwartenden Betriebstemperaturen der Bauelemente standhalten. Beispiele für Materialien dieser Art sind Plexiglas (PMMA) oder Polycarbonat.

Auf der Oberfläche der metallisierten Trägerplatte 10 werden, wie in Figur 2 angedeutet, durch Prägen mit einem Formwerkzeug 12 elektrische Strukturen 16 sowie Justierstrukturen 18 angelegt. Beim Prägen reißt an Stellen senkrechter Kanten 19 die Metallschicht 11 ab. Dies gestattet es, auf der Oberfläche der Trägerplatte 10 beliebige Strukturen zu erzeugen, die von den übrigen Teilen der Trägerplatte 10 elektrisch isoliert sind. Leiterbahnen 16 können so, wie in Figur 2 gezeigt, durch Einprägen der umlaufenden Kanten in Form von Gräben 15 erzeugt werden. Jeweils zwischen zwei Gräben 15 verbleibt dabei eine isolierte elektrische Fläche, die Leiterbahn 16. Eine abgewandelte Form dieser Leiterbahnenerzeugung sieht vor, die gesamte, eine Leiterbahn 16 umgebende Fläche einzuprägen, und nur die Leiterbahn 16 erhaben stehen zu belassen. Alternativ lassen sich weiterhin auch tiefergelegte Leiterbahnen 16 durch Einprägen der Leiterbahnstruktur selbst in die Trägerplatte 10 erzeugen. Wegen der hohen Belastung der Metallschicht 11 beim Prägen ist bei letzterem Verfahren allerdings eine besonders gute Haftung zwischen der Metallschicht 11 und dem thermoplastischen Material der Trägerplatte 10 vorauszusetzen.

Die Justierstrukturen 18 besitzen wegen seiner selbstjustierenden Eigenschaft vorzugsweise einen V-förmigen Querschnitt. Möglich sind aber selbstverständlich auch beliebige andere Querschnitte.

Das für den Prägeschritt verwendete Formwerkzeug 12 wird zweckmäßig durch mikrogalvanische Abformung eines Siliziumwafers hergestellt. Auf dem Siliziumwafer werden hierbei die elektrischen Strukturen 16 sowie die Justierstrukturen 18 photolithographisch definiert, und durch bekannte Verfahren der Mikrostrukturierung, wie etwa dem trocken- oder dem naßchemisches Ätzen, realisiert. Vom fertig bearbeiteten Wafer wird anschließend durch galvanische Abformung eine metallische Replika erzeugt, das Formwerkzeug 12. Seine Form ist das inverse Abbild der später in die Trägerplatte 10 eingeprägten Struktur. Wie in Figur 2 angedeutet, weist sie insbesondere Zinnen 14 zur Erzeugung der Gräben 15, und damit der Leiterbahnen 16, sowie eine pfeilspitzenförmige Gegenjustierstruktur 13 auf. Beim Prägen kann es zu einem Schrumpf der thermoplastischen Trägerplatte 10 kommen. Er wird durch einen entsprechenden Vorhalt bei der Auslegung der Strukturen des Formwerkzeuges 12 berücksichtigt.

Beim Prägen erzeugte elektrische Strukturen, vor allem sind dies die Leiterbahnen 16, welche untereinander verbunden sein sollen, werden anschließend galvanisch verstärkt. Vorzugsweise durch galvanisches Abscheiden wird dabei auf die vorhandene Metallschicht 11 eine weitere Metallschicht 21 mit einer gewünschten Stärke aufgebracht. In einfacher Weise kann für die Schicht 21 dasselbe Metall eingesetzt werden wie für die Metallschicht 11. Die Ausbildung der Metallschicht 21 kann durch eine selektives Ätzen unterschiedlicher Metalle erfolgen, dabei werden Ätzlösungssysteme verwendet, die jeweils nur ein bestimmtes Metall ätzen, oder durch Differenzätzen, dabei wird solange geätzt, bis die dünne Grundmetallisierung entfernt ist, und nur die galvanisch verstärkten Strukturen mit entsprechend verringerter Schichtdicke verbleiben, erfolgen. Nachfolgend werden verbleibende, nicht galvanisch verstärkte Bestandteile der Metallschicht 11 in einem Ätzschritt komplett entfernt. Er kann abhängig von dem für die Schicht 21 verwendeten Metall mit selektiven oder nicht selektiven Ätzlösungen erfolgen. In der Regel verringert sich beim Ätzen die Dicke der Metallschicht 21, der Dickenverlust ist beim vorhergehenden galvanischen Verstärken durch entsprechend dickere Auslegung der Metallschicht 21 zu berücksichtigen.

Nach dem Ätzen verbleiben auf der Trägerplatte 10 an metallischen Strukturen nur die zuvor galvanisch verstärkten Strukturen, das heißt insbesondere die Leiterbahnen 16. Einige Anordnungen, etwa thermooptische Bauelemente, erfordern für die Leiterbahnen 16 einen bestimmten elektrischen Widerstand. Der Ätzschritt wird in diesem Fall so geführt, daß die Leiterbahnen 16 eine bestimmte Schichtdicke, und somit den geforderten Widerstand aufweisen. Figur 4 veranschaulicht den Zustand einer Trägerplatte nach dem Entfernen der nichtverstärkten Metallstrukturen.

In Bauelementen, deren optische Eigenschaften sie nicht stören, können die nicht genutzten Teile der Metallschicht 11 nach dem Prägen auch auf der Trägerplatte 10 verbleiben. Sofern die Metallschicht 11 eine ausreichende elektrische Leitfähigkeit aufweist, kann hierbei auch die galvanische Verstärkung der Leiterbahnen 16 durch Aufbringen der Metallschicht 21 entfallen.

An die mit elektrischen Strukturen versehene Trägerplatte 10 wird sodann ein zweites Formwerkzeug 22 angesetzt. Es ist zweckmäßig auf die gleiche Art wie das erste Formwerkzeug 12 hergestellt und verfügt insbesondere ebenfalls über eine pfeilspitzenförmige Gegenjustierstruktur 25, die ein genaues inverses Abbild der in die Trägerplatte 10 eingeprägten V-förmigen Justierstruktur 18 ist. Daneben weist das Formwerkzeug 2 weiterhin eine Wallstruktur 23 mit rechteckigem Querschnitt zur Erzeugung eines Lichtwellenleiterkanals, sowie einen Auflageholm 24 auf. Beim Zusammenbringen der vorbereiteten Trägerplatte 10 mit dem Formwerkzeug 2 greift die pfeilspitzenförmige Gegenjustierstruktur 25 in die auf der Trägerplatte 10 vorhandene Justierstruktur 18 und bewirkt so eine exakte Ausrichtung des Formwerkzeuges 22 auf die Trägerplatte 10. Aufgrund ihrer definierten Lage in Bezug auf die Gegenjustierstruktur 25 wird dabei die Wallstruktur 23 exakt auf die Leiterbahn 16 ausgerichtet, welche ihrerseits definiert zur Justierstruktur 18 angeordnet ist. Der Auflageholm 24 gewährleistet einen definierten Abstand zwischen der Wallstruktur 23, das heißt, dem späteren Lichtwellenleiter und der Leiterbahn 16.

Die Trägerplatte 10 und der sich zwischen Trägerplatte 10 und Formwerkzeug 22 ausbildende Zwischenraum 28 werden anschließend mit einem Substratmaterial 17, zweckmäßig einem Kunststoff vergossen. In einfacher Weise wird hierfür ein konventionelles Reaktionsgießverfahren eingesetzt, das, um einen Reaktionsschrumpf zu minimieren, vorteilhaft unter Druck durchgeführt wird.

Das Formwerkzeug 22 wird sodann von der vergossenen Trägerplatte entfernt. Es entsteht, wie in Figur 5 wiedergegeben, eine Anordnung mit innenliegender Trägerplatte 10, die von einem Wellenleitersubstrat 26 aus Kunststoff 17 eingefaßt ist. Zu einer Oberseite hin weist das Wellenleitersubstrat 26 eine bis in die Trägerplatte 10 herabreichende V-Nut sowie einen, von der Wallstruktur 23 des Formwerkzeuges 22 abgeformten Kanal 29 auf. Exakt unterhalb des Kanals 29 befindet sich innenliegend die Leiterbahn 16.

In den Kanal 29 wird nun als Core-Material zur Ausbildung eines Lichtwellenleiters 27 ein Präpolymer, dessen Brechungsindex höher ist als der des zur Herstellung des Wellenleitersubstrates 26 verwendeten Substratmateriales 17, eingefüllt und anschließend vernetzt. Dabei wird gleichzeitig eine Deckelplatte 30 auf die Anordnung aufgepreßt, wodurch überschüssiges Präpolymer verdrängt und der entstandene Lichtwellenleiter 27 nach oben abgedeckt wird. Der Verfahrensschritt ist in Figur 5 veranschaulicht. Das nach Aufsetzen der Deckelplatte 30 entstandene Bauelement mit einander exakt zugeordnete Lichtwellenleiter27 und Leiterbahnstrukturen 16 eignet sich beispielsweise als thermisch gesteuerter optischer Schalter. Ist eine Glasfaserankopplung vorgesehen, sind die Fasern vor dem Einfüllen des Präpolymers in den Kanal 29 in die V-Nuten 31 einzulegen. Die durch Abformung des Auflageholmes 24 im Wellenleitersubstrat 26 entstandene Ausnehmung hat für die Funktion des Bauelements keine Bedeutung. Sie kann leer belassen, zusammen mit dem Kanal 29 mit einem Präpolymer befüllt, oder nach Herstellungsende vom Bauelement abgetrennt werden.

## Patentansprüche

1. Verfahren zur Herstellung eines elektrooptischen Bauelements mit einer Trägerplatte, worauf elektrische Strukturen angeordnet sind, und mit einem Wellenleitersubstrat, in das ein Lichtwellenleiter eingeformt ist, gekennzeichnet durch folgende Verfahrensschritte:
- Anlegen der elektrischen Strukturen (16) sowie einer Justierstruktur (18) auf der Trägerplatte (10)
- Aufbringen eines Substratmateriales (17) auf die Trägerplatte (10)
- Abformen eines Formwerkzeuges (22) zur Erzeugung von Lichtwellenleiterkanälen (29) in das Substratmaterial (17), wobei das Formwerkzeug (22) eine mit der Justierstruktur (18) auf der Trägerplatte (10) zusammenwirkende Gegenjustierstruktur (25) aufweist, mittels derer es auf die Trägerplatte (10) ausgerichtet wird.

2. Verfahren nach Anspruch 1, dadurch gekennzeichnet, daß das Anlegen der Justierstruktur (18) und der elektrischen Strukturen (16) auf der Trägerplatte (10) durch Prägen erfolgt.

3. Verfahren nach Anspruch 2, dadurch gekennzeichnet, daß Justierstruktur (18) und elektrische Strukturen (16) mit demselben Formwerkzeug (12) angelegt werden.

4. Verfahren nach Anspruch 2, dadurch gekennzeichnet, daß auf die Trägerplatte (10) vor dem Prägen eine dünne Metallschicht (11) aufgebracht wird.

5. Verfahren nach Anspruch 2, dadurch gekennzeichnet, daß die elektrischen Strukturen (16) galvanisch verstärkt werden.

6. Verfahren nach Anspruch 1, dadurch gekennzeichnet, daß das Aufbringen des Substratmateriales (17) durch Gießen erfolgt.

7. Verfahren nach Anspruch 6, dadurch gekennzeichnet, daß das Abformen des Formwerkzeuges (22) zur Erzeugung von Lichtwellenleiterkanälen (29) durch Abguß erfolgt.

## Claims

1. Method for producing an electro-optical component having a carrier plate on which electric structures are arranged, and having a waveguide substrate in which an optical waveguide is formed, characterized by the following method steps:
- mounting the electric structures (16) and an adjusting structure (18) on the carrier plate (10),
- applying a substrate material (17) to the carrier plate (10), and
- moulding a forming die (22) for producing optical waveguide channels (29) in the substrate material (17), the forming die (22) having a mating adjusting structure (25) which interacts with the adjusting structure (18) on the carrier plate (10) and by means of which said forming die is aligned with the carrier plate (10).

2. Method according to Claim 1, characterized in that the adjusting structure (18) and the electric structures (16) are mounted on the carrier plate (10) by embossing.

3. Method according to Claim 2, characterized in that the adjusting structure (18) and electric structures (16) are mounted using the same forming die (12).

4. Method according to Claim 2, characterized in that before the embossing a thin metal layer (11) is applied to the carrier plate (10).

5. Method according to Claim 2, characterized in that the electric structures (16) are reinforced by electroplating.

6. Method according to Claim 1, characterized in that the substrate material (17) is applied by casting.

7. Method according to Claim 6, characterized in that the forming die (22) for producing optical waveguide channels (29) is moulded by casting.

## Revendications

1. Procédé de fabrication d'un composant électro-optique comprenant une plaque de support recevant des structures électriques et un substrat de guide d'onde dans lequel est moulé un guide d'onde optique,
caractérisé par
les étapes opératoires suivantes :
- application des structures électriques (16) et des structures d'ajustage (18) sur la plaque de support (10),
- mise en place d'une matière de support (17) sur la plaque de support (10),
- moulage avec un moule (22) pour former les canaux des guides d'onde optiques (29) dans la matière du substrat (17), le moule (22) comportant une structure d'ajustage complémentaire (25) coopérant avec la structure d'ajustage (18) de la plaque de support (10), et par laquelle se fait l'alignement sur la plaque de support (10).

2. Procédé selon la revendication 1,
caractérisé en ce qu'
on réalise la structure d'ajustage (18) et les structures électriques (16) sur la plaque de support (10) par matriçage.

3. Procédé selon la revendication 1,
caractérisé en ce qu'
on réalise la structure d'ajustage (18) et les structures électriques (16) avec le même moule (12).

4. Procédé selon la revendication 2,
caractérisé en ce que
la plaque de support (10) reçoit une mince couche métallique (11) avant son matriçage.

5. Procédé selon la revendication 2,
caractérisé en ce que
les structures électriques (16) sont renforcées galvaniquement.

6. Procédé selon la revendication 1,
caractérisé en ce qu'
on applique la matière du substrat (17) par coulée.

7. Procédé selon la revendication 6,
caractérisé en ce que
la mise en forme par le moule (22) pour réaliser les canaux de guide de lumière (29) se fait par coulée.
